# EUROPEAN PATENT APPLICATION

(11) **EP 4 648 412 A1**
(43) Date of publication of application: **12.11.2025**
(21) Application number: 24738524.8
(22) Date of filing: 04.01.2024
(51) Int. Cl.: H04N 19/157, H04N 19/50

(54) **LIST CREATING METHOD AND TERMINAL**

(30) Priority: 04.01.2023 CN 202310010372; 07.04.2023 CN 202310366978
(71) Applicant: Vivo Mobile Communication Co., Ltd., Dongguan, Guangdong 523863 (CN)
(72) Inventor: ZHOU, Chuan, Dongguan, Guangdong 523863 (CN); LV, Zhuoyi, Dongguan, Guangdong 523863 (CN)
(74) Representative: Lavoix
(86) International application number: PCT/CN2024/070533
(87) International publication number: WO 2024/146591

(57) **Abstract**

Embodiments of this application provide a list construction method and a terminal, pertaining to the field of intra-prediction technologies. The list construction method includes: determining M first intra-prediction modes based on a prediction cost corresponding to each of N first intra-prediction modes; where the M first intra-prediction modes are at least part of the N first intra-prediction modes; performing mode offset on at least part of angular prediction modes in the M first intra-prediction modes based on an order of the M first intra-prediction modes to obtain K second intra-prediction modes; and establishing a most likely mode MPM list based on the M first intra-prediction modes and the K second intra-prediction modes; where the MPM list includes the M first intra-prediction modes and the K second intra-prediction modes.

## Description

### CROSS-REFERENCE TO RELATED APPLICATIONS

This application claims priority to Chinese Patent Application No. 202310010372.1, filed in China on January 4, 2023 and Chinese Patent Application No. 202310366978.9 filed in China on April 7, 2023, which are incorporated herein by reference in their entirety.

### TECHNICAL FIELD

This application relates to the field of intra-prediction technologies, and specifically, to a list construction method and a terminal.

### BACKGROUND

In the process of intra prediction, it is necessary to establish a most probably mode (Most probably mode, MPM) list corresponding to a current block according to an intra-prediction mode, where the intra-prediction mode includes a direct current (direct current, DC) mode, a planar (Planar) mode, and an angular prediction mode.

In the related art, the MPM list includes a primary MPM (primary MPM) list and a secondary MPM (Secondary MPM, SMPM) list, where the PMPM list includes 6 prediction modes and the SMPM list includes 16 prediction modes, and both the prediction modes included in the PMPM list and the prediction modes included in the SMPM list are formed in a preset order, which leads to a relatively large number of bits required for encoding indexes of the MPM list.

### SUMMARY

Embodiments of this application provide a list construction method and a terminal, which can resolve the problem of a relatively large number of bits required for encoding indexes of an MPM list.

According to a first aspect, a list construction method is provided, including:
determining M first intra-prediction modes based on a prediction cost corresponding to each of N first intra-prediction modes; where the M first intra-prediction modes are at least part of the N first intra-prediction modes, where N is a positive integer greater than 1 and M is a positive integer less than or equal to N;
performing mode offset on at least part of angular prediction modes in the M first intra-prediction modes based on an order of the M first intra-prediction modes to obtain K second intra-prediction modes; where K is a positive integer greater than 1; and
establishing a most likely mode MPM list based on the M first intra-prediction modes and the K second intra-prediction modes; where the MPM list includes the M first intra-prediction modes and the K second intra-prediction modes.

According to a second aspect, a list construction apparatus is provided, including:
a first determining module, configured to determine M first intra-prediction modes based on a prediction cost corresponding to each of N first intra-prediction modes; where the M first intra-prediction modes are at least part of the N first intra-prediction modes, where N is a positive integer greater than 1 and M is a positive integer less than or equal to N;
a processing module, configured to perform mode offset on at least part of angular prediction modes in the M first intra-prediction modes based on an order of the M first intra-prediction modes to obtain K second intra-prediction modes; where K is a positive integer greater than 1; and
an establishment module, configured to establish a most likely mode MPM list based on the M first intra-prediction modes and the K second intra-prediction modes; where the MPM list includes the M first intra-prediction modes and the K second intra-prediction modes.

According to a third aspect, a terminal is provided, where the terminal includes a processor and a memory, where a program or instructions capable of running on the processor are stored in the memory. When the program or the instructions are executed by the processor, the steps of the method according to the first aspect are implemented.

According to a fourth aspect, a readable storage medium is provided, where a program or an instruction is stored in the readable storage medium, and when the program or the instruction is executed by a processor, the steps of the method according to the first aspect are implemented.

According to a fifth aspect, a chip is provided, where the chip includes a processor and a communication interface, the communication interface is coupled to the processor, and the processor is configured to run a program or instructions, to implement the method according to the first aspect.

According to a sixth aspect, a computer program/program product is provided, where the computer program/program product is stored in a storage medium, and the computer program/program product is executed by at least one processor to implement the steps of the method according to the first aspect.

The MPM list established in the embodiments of this application includes M first intra-prediction modes and K second intra-prediction modes, where the M first intra-prediction modes are determined based on the prediction cost corresponding to each of the N first intra-prediction modes, and the K second intra-prediction modes are determined by performing mode offset on at least part of the angular prediction modes in the M first intra-prediction modes. In the embodiments of this application, optimizing the MPM list reduces the number of bits required for encoding intra-prediction mode indexes of the MPM list, thereby improving compression efficiency.

### BRIEF DESCRIPTION OF DRAWINGS

FIG. 1 is a schematic flowchart of a list construction method according to an embodiment of this application;
FIG. 2 is a schematic diagram of a neighboring block according to an embodiment of this application;
FIG. 3 is a structural diagram of a list construction apparatus according to an embodiment of this application;
FIG. 4 is a structural diagram of a communication device according to an embodiment of this application; and
FIG. 5 is a schematic diagram of a hardware structure of a terminal according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by people of ordinary skills in this field fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The list construction apparatus corresponding to the list construction method in the embodiments of this application may be a terminal. The terminal may also be referred to as a terminal device or user equipment (User Equipment, UE). The terminal may be a terminal-side device such as a mobile phone, a tablet computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal is not limited in the embodiments of this application.

This application provides a list construction method, where the list construction method may be applied to a decoding end. The following specifically describes the list construction method provided in the embodiments of this application through specific embodiments and application scenarios thereof with reference to the accompanying drawings.

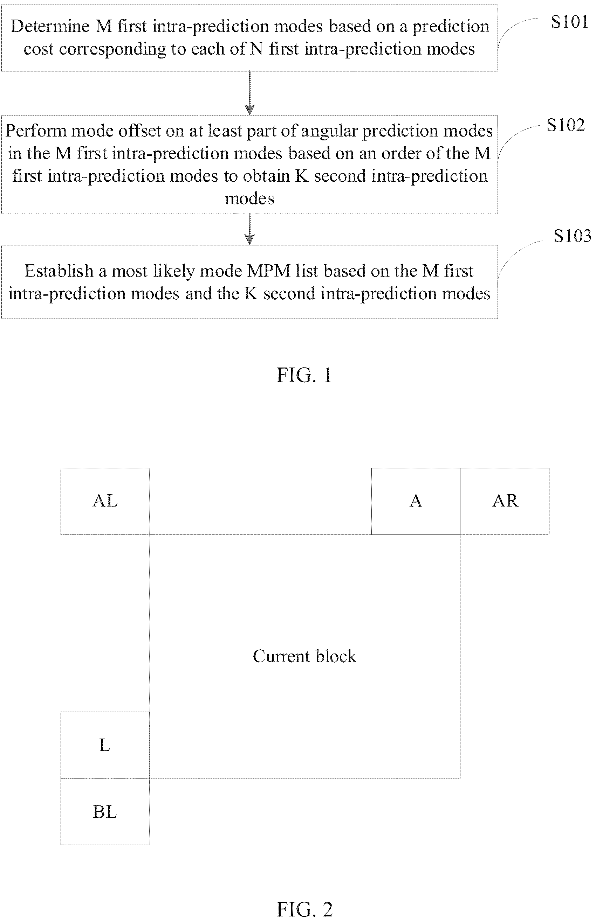

Referring to FIG. 1, FIG. 1 is a schematic flowchart of a list construction method according to an embodiment of this application. The list construction method provided in this embodiment includes the following steps.

S101: Determine M first intra-prediction modes based on a prediction cost corresponding to each of N first intra-prediction modes.

In an optional implementation, the N first intra-prediction modes include a Planar mode and five angular prediction modes. The five angular prediction modes are an intra-prediction mode of a neighboring block on the left side of the current block, an intra-prediction mode of a neighboring block above the current block, an intra-prediction mode of a neighboring block located at the bottom-left of the current block, an intra-prediction mode of a neighboring block located at the top-right of the current block, and an intra-prediction mode of a neighboring block located at the top-left of the current block.

For ease of understanding, referring to FIG. 2. The symbol L shown in FIG. 2 is used to represent the neighboring block on the left side of the current block, the symbol A shown in FIG. 2 is used to represent the neighboring block above the current block, the symbol BL shown in FIG. 2 is used to represent the neighboring block located at the bottom-left of the current block, the symbol AR shown in FIG. 2 is used to represent the neighboring block located at the top-right of the current block, and the symbol AL shown in FIG. 2 is used to represent the neighboring block located at the top-left of the current block.

In another optional implementation, in addition to the Planar mode and five angular prediction modes, the N first intra-prediction modes include a plurality of intra-prediction modes obtained based on decoder-side intra mode derivation (Decoder-side Intra Mode Derivation, DIMD).

In another optional implementation, in addition to the Planar mode and five angular prediction modes, the N first intra-prediction modes include intra-prediction modes determined based on remaining neighboring blocks of the current block.

In another optional implementation, the N first intra-prediction modes include the Planar mode, five angular prediction modes, a plurality of intra-prediction modes obtained based on DIMD, and intra-prediction modes determined based on remaining neighboring blocks of the current block.

In another optional implementation, the N first intra-prediction modes include the Planar mode, a plurality of intra-prediction modes obtained based on DIMD, intra-prediction modes determined based on neighboring blocks of the current block, and an intra-prediction mode determined based on a non-neighboring block of the current block.

In this step, the M first intra-prediction modes are determined based on the prediction cost corresponding to each of the N first intra-prediction modes. The M first intra-prediction modes are at least part of the N first intra-prediction modes, where N is a positive integer greater than 1 and M is a positive integer less than or equal to N;

For how to specifically determine the implementation of M first intra-prediction modes, refer to subsequent embodiments.

S102: Perform mode offset on at least part of angular prediction modes in the M first intra-prediction modes based on an order of the M first intra-prediction modes to obtain K second intra-prediction modes.

It should be understood that the M first intra-prediction modes can be sorted according to an ascending order of prediction costs. In this step, mode offset is performed on at least part of angular prediction modes in the M first intra-prediction modes based on an order of the M first intra-prediction modes to obtain K second intra-prediction modes; where K is a positive integer greater than 1. Optionally, the second intra-prediction mode is an angular prediction mode and the sum of M and K is a preset value; optionally, the preset value is 22.

For example, in a case that the M first intra-prediction modes include 4 angular prediction modes, 4 second intra-prediction modes can be obtained by performing mode offset on each angular prediction mode, so as to obtain 16 second intra-prediction modes. For example, if one angular prediction mode corresponds to a prediction angle of 45 degrees, mode offset is performed on the angular prediction mode based on the prediction angle. In this way, an angular prediction mode corresponding to a prediction angle of 55 degrees, an angular prediction mode corresponding to a prediction angle of 65 degrees, an angular prediction mode corresponding to a prediction angle of 35 degrees, and an angular prediction mode corresponding to a prediction angle of 25 degrees can be determined as second intra-prediction modes.

Optionally, mode offset can be performed on all angular prediction modes in the M first intra-prediction modes to obtain a plurality of second intra-prediction modes. The plurality of second intra-prediction modes can be sorted in ascending order of prediction costs, to obtain top K second intra-prediction modes.

S103: Establish a most likely mode MPM list based on the M first intra-prediction modes and the K second intra-prediction modes.

In this step, after the M first intra-prediction modes and the K second intra-prediction modes are obtained, the MPM list can be established based on the M first intra-prediction modes and the K second intra-prediction modes. Specifically, the MPM list includes the M first intra-prediction modes and the K second intra-prediction modes.

In other embodiments, the MPM list includes a PMPM list, an SMPM list, and a third intra-prediction mode, where the third intra-prediction mode is an intra-prediction mode other than the first intra-prediction mode and the second intra-prediction mode.

Optionally, the PMPM list includes M first intra-prediction modes, and the SMPM list includes K second intra-prediction modes.

Optionally, the PMPM list includes M first intra-prediction modes and part of K second intra-prediction modes, and the SMPM list includes remaining second intra-prediction modes in the K second intra-prediction modes.

Optionally, the SMPM list can be segmented. In this case, the SMPM list index includes an intra-segment index and a segment index corresponding to each segment of the list. The segment index can be obtained through parsing by using a context-based method and the segment index is binarized using truncated unary coding. The intra-segment index can be obtained through parsing by using a sidelink decoding method and the intra-segment index is binarized using fixed-length coding.

The MPM list established in the embodiments of this application includes M first intra-prediction modes and K second intra-prediction modes, where the M first intra-prediction modes are determined based on the prediction cost corresponding to each of the N first intra-prediction modes, and the K second intra-prediction modes are determined by performing mode offset on at least part of the angular prediction modes in the M first intra-prediction modes. In the embodiments of this application, optimizing the MPM list reduces the number of bits required for encoding intra-prediction mode indexes of the MPM list, thereby improving compression efficiency.

Optionally, the determining M first intra-prediction modes based on a prediction cost corresponding to each of N first intra-prediction modes includes:
calculating a prediction cost corresponding to each of the N first intra-prediction modes; and
obtaining the top M first intra-prediction modes from the N first intra-prediction modes according to an ascending order of prediction costs.

In this embodiment, the prediction cost corresponding to each of the N first intra-prediction modes can be calculated. Then, the top M first intra-prediction modes are obtained from the N first intra-prediction modes according to an ascending order of prediction costs. In this way, in a subsequent process of constructing the MPM list, the first intra-prediction modes with lower prediction costs are placed at the forefront of the MPM list. Optimizing the MPM list in this manner reduces the number of bits required for encoding intra-prediction mode indexes of the MPM list, thereby improving compression efficiency.

Optionally, the determining M first intra-prediction modes based on a prediction cost corresponding to each of N first intra-prediction modes includes:
calculating a prediction cost corresponding to each of the N first intra-prediction modes;
obtaining the top M-1 first intra-prediction modes from the N first intra-prediction modes according to an ascending order of prediction costs; and
determining the M first intra-prediction modes based on a preset Planar mode and the top M-1 first intra-prediction modes, where
the Planar mode is the 1st intra-prediction mode in the M first intra-prediction modes.

In this embodiment, the Planar mode may be used as the 1st intra-prediction mode in the M first intra-prediction modes. For remaining M-1 first intra-prediction modes in the M first intra-prediction modes, the prediction cost corresponding to each of the N first intra-prediction modes can be calculated. Then, the top M-1 first intra-prediction modes are obtained from the N first intra-prediction modes according to an ascending order of prediction costs. In this way, in a subsequent process of constructing the MPM list, the Planar mode is used as the 1st intra-prediction mode in the MPM list, followed by these M-1 first intra-prediction modes at the forefront of the MPM list. Optimizing the MPM list in this manner reduces the number of bits required for encoding intra-prediction mode indexes of the MPM list, thereby improving compression efficiency.

Optionally, the prediction cost corresponding to the first intra-prediction mode is a sum of absolute transformed differences between a predicted value of a template corresponding to a current block and a reconstructed value of the template, or the prediction cost corresponding to the first intra-prediction mode is a sum of absolute values between the predicted value of the template corresponding to the current block and the reconstructed value of the template.

In an optional implementation, the template corresponding to the current block is determined and the reconstructed value of the template is obtained. The first intra-prediction mode is used to predict the template to obtain the predicted value of the template. The sum of absolute transformed differences (Sum of Absolute Transformed Difference, SATD) between the predicted value of the template and the reconstructed value of the template is then determined as the prediction cost corresponding to the first intra-prediction mode. The template corresponding to the current block is adjacent to the current block.

In another optional implementation, the template corresponding to the current block is determined and the reconstructed value of the template is obtained. The first intra-prediction mode is used to predict the template to obtain the predicted value of the template. The sum of absolute values between the predicted value of the template and the reconstructed value of the template is then determined as the prediction cost corresponding to the first intra-prediction mode.

Optionally, each of the K second prediction modes is sorted according to an ascending order of prediction costs.

In this embodiment, K second prediction modes can be further sorted, and the K second prediction modes can be sorted according to an ascending order of prediction costs. In this way, in a subsequent process of constructing the MPM list, second prediction modes with lower prediction costs are placed at the forefront of the MPM list. Optimizing the MPM list in this manner reduces the number of bits required for encoding intra-prediction mode indexes of the MPM list, thereby improving compression efficiency.

Optionally, the top L second prediction modes in the K second prediction modes are sorted according to an ascending order of prediction costs.

In this embodiment, the L second prediction modes in the K second prediction modes can be further sorted, and the L second prediction modes can be sorted according to an ascending order of prediction costs, where L is a positive integer less than K. In this way, in a subsequent process of constructing the MPM list, L second prediction modes with lower prediction costs are placed at the forefront of the MPM list. Optimizing the MPM list in this manner reduces the number of bits required for encoding intra-prediction mode indexes of the MPM list, thereby improving compression efficiency.

Optionally, before the determining M first intra-prediction modes based on a prediction cost corresponding to each of N first intra-prediction modes, the method further includes:
obtaining a first identifier;
in a case that the first identifier indicates enabling Planar independent coding, determining that the N first intra-prediction modes include a Planar mode; and
in a case that the first identifier indicates not enabling Planar independent coding, determining that the N first intra-prediction modes include no Planar mode.

The first identifier is a sequence-level identifier or a frame-level identifier.

In this embodiment, in a case that the first identifier is 1, it indicates enabling Planar independent coding. In this case, it can be determined that the N first intra-prediction modes include the Planar mode, and the subsequently constructed MPM list includes the Planar mode.

In a case that the first identifier is 0, it indicates not enabling Planar independent coding. In this case, it can be determined that the N first intra-prediction modes include no Planar mode, and the subsequently constructed MPM list also includes no Planar mode.

In this embodiment, whether Planar independent coding is enabled is indicated by setting the first identifier, and in a case that Planar independent coding is enabled, it is determined that the N first intra-prediction modes include the Planar mode, so that in the subsequent process of constructing the MPM list, the Planar mode can be set at the front of the MPM list, thereby reducing the number of bits for encoding a Planar mode index.

Optionally, the determining M first intra-prediction modes based on a prediction cost corresponding to each of N first intra-prediction modes includes:
obtaining a second identifier and a third identifier; and
in a case that the second identifier is used to indicate determining a target intra-prediction mode based on a PMPM list included in the MPM list and the third identifier is used to indicate not determining a target intra-prediction mode based on an SMPM list included in the MPM list, determining the M first intra-prediction modes based on the prediction cost corresponding to each of the N first intra-prediction modes.

The second identifier is a PMPM identifier, and the third identifier is an SMPM identifier.

In this embodiment, in a case that the PMPM identifier is 1 and the SMPM identifier is 0, it indicates that a target intra-prediction mode is determined by the PMPM list included in the MPM list. In this case, the MPM list can be constructed by using the list construction method provided in this application, that is, the step of determining M first intra-prediction modes based on the prediction cost corresponding to each of the N first intra-prediction modes is executed. The target intra-prediction mode is an intra-prediction mode for intra prediction of the current block.

Optionally, if the obtained PMPM identifier is 0 and the SMPM identifier is 0, the MPM list is constructed using the list construction method in the related art. If the obtained PMPM identifier is 0 and the SMPM identifier is 1, the MPM list is constructed by using the list construction method in the related art.

In this embodiment, based on the obtained PMPM identifier and SMPM identifier, it is determined whether to use the list construction method provided in this application to construct the MPM list, so as to set a use condition for the list construction method provided in this application, thereby achieving the technical effect of reducing complexity of constructing the MPM list.

Optionally, the determining M first intra-prediction modes based on a prediction cost corresponding to each of N first intra-prediction modes includes:
obtaining a fourth identifier; and
in a case that the fourth identifier is the target value, determining the M first intra-prediction modes based on the prediction cost corresponding to each of the N first intra-prediction modes.

The fourth identifier is a sequence-level identifier or a frame-level identifier corresponding to the current block, and the target value is 1.

In this embodiment, if the obtained fourth identifier is 1, it indicates that the MPM list can be constructed by using the list construction method provided in this application, the step of determining M first intra-prediction modes based on the prediction cost corresponding to each of the N first intra-prediction modes is executed.

Optionally, if the obtained fourth identifier is 0, the MPM list can be constructed using the list construction method in the related art.

In this embodiment, based on the obtained sequence-level identifier or frame-level identifier, it is determined whether to use the list construction method provided in this application to construct the MPM list, so as to set a use condition for the list construction method provided in this application, thereby achieving the technical effect of reducing complexity of constructing the MPM list.

Optionally, the determining M first intra-prediction modes based on a prediction cost corresponding to each of N first intra-prediction modes includes:
in a case that a block size corresponding to a current block meets a preset condition, determining the M first intra-prediction modes based on the prediction cost corresponding to each of the N first intra-prediction modes.

In this embodiment, in a case that the block size of the current block meets the preset condition, the MPM list is constructed by using the list construction method provided in this application, that is, the step of determining M first intra-prediction modes based on the prediction cost corresponding to each of the N first intra-prediction modes is executed. In a case that the block size of the current block does not meet the preset condition, the MPM list is constructed by using the list construction method provided in the related art, so as to reduce complexity of constructing the MPM list.

For example, the preset condition may be that a product of the width and height of the current block is less than or equal to 1024. In this case, if the product of the width and height of the current block is less than or equal to 1024, the MPM list is constructed by using the list construction method provided in this application.

In this embodiment, based on the block size corresponding to the current block, it is determined whether to use the list construction method provided in this application to construct the MPM list, so as to set a use condition for the list construction method provided in this application, thereby achieving the technical effect of reducing complexity of constructing the MPM list.

Optionally, in this embodiment of this application, values of N and M can be determined by the following steps.
(1) The value of N is greater than or equal to the first threshold, so as to reduce complexity of constructing the MPM list. That is, when the value of N is greater than or equal to the first threshold, S 101 is executed.
   Optionally, the first threshold is determined based on a frame type, the frame type is a type of a frame corresponding to the current block. For example, in a case that the current frame is an I frame, the first threshold is 5; in a case that the current frame is a B frame or a P frame, the first threshold is 2.
(2) In a case that N is greater than or equal to a second threshold, it is determined that M is equal to the second threshold; or in a case that N is less than the second threshold, it is determined that M is equal to N. That is, the second threshold can be understood as the upper limit of M. Optionally, the second threshold is determined based on a frame type. For example, in a case that the current frame is an I frame, the second threshold is 5; in a case that the current frame is a B frame or a P frame, the second threshold is 6. Supposing the second threshold is 5, when N is 6, M is 5; and when N is 2, M is 2.

Optionally, in this embodiment of this application, the N first intra-prediction modes can be selected from S candidate intra-prediction modes, where S is greater than or equal to N. The S candidate intra-prediction modes may include the foregoing Planar mode, angular prediction mode, intra-prediction modes determined based on remaining neighboring blocks of the current block, and the like.

Specifically, the S candidate intra-prediction modes can be obtained, and the N first intra-prediction modes can be determined based on an order of the S candidate intra-prediction modes. For example, top N candidate intra-prediction modes can be selected from the S candidate intra-prediction modes as the N first intra-prediction modes. The S candidate intra-prediction modes are not repeated.

Optionally, the M first intra-prediction modes are located before the K second intra-prediction modes in the MPM list.

In this embodiment, the M first intra-prediction modes in the MPM list can be set to be before the K second intra-prediction modes, and then an intra-prediction mode with a higher probability of being selected as the target intra-prediction mode is placed at the forefront of the MPM list. Optimizing the MPM list in this manner reduces the number of bits required for encoding intra-prediction mode indexes of the MPM list, thereby improving compression efficiency.

Optionally, the method further includes:
obtaining a second identifier and an intra-prediction mode index; and
in a case that the second identifier is used to indicate determining the target intra-prediction mode based on the PMPM list included in the MPM list, that the intra-prediction mode index is used to indicate determining the 1st mode in the PMPM list as the target intra-prediction mode, and that the 1st mode in the PMPM list is a Planar mode, determining the Planar mode as the target intra-prediction mode.

The second identifier is a PMPM identifier.

In this embodiment, in a case that the PMPM identifier is 1 and the intra-prediction mode index is 0, it indicates that the 1st intra-prediction mode in the PMPM list is determined as the target intra-prediction mode. The target intra-prediction mode can then be used for intra prediction of the current block. If the 1st mode in the PMPM list is the Planar mode, then the Planar mode is determined as the target intra-prediction mode.

In this embodiment, the second identifier and the intra-prediction mode index are set, and the target intra-prediction mode is determined based on the second identifier and the intra-prediction mode index, thereby reducing complexity of constructing the MPM list.

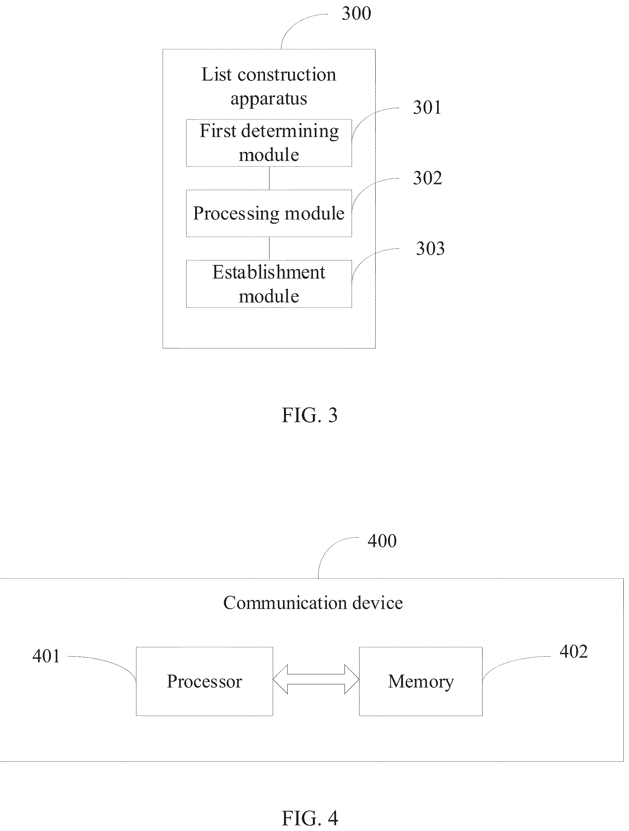

As shown in FIG. 3, an embodiment of this application further provides a list construction apparatus 300, which includes:
a first determining module 301, configured to determine M first intra-prediction modes based on a prediction cost corresponding to each of N first intra-prediction modes; where the M first intra-prediction modes are at least part of the N first intra-prediction modes, where N is a positive integer greater than 1 and M is a positive integer less than or equal to N;
a processing module 302, configured to perform mode offset on at least part of angular prediction modes in the M first intra-prediction modes based on an order of the M first intra-prediction modes to obtain K second intra-prediction modes; where K is a positive integer greater than 1; and
an establishment module 303, configured to establish a most likely mode MPM list based on the M first intra-prediction modes and the K second intra-prediction modes; where the MPM list includes the M first intra-prediction modes and the K second intra-prediction modes.

Optionally, the first determining module 301 is specifically configured to:
calculate a prediction cost corresponding to each of the N first intra-prediction modes; and
obtain the top M first intra-prediction modes from the N first intra-prediction modes according to an ascending order of prediction costs.

Optionally, the first determining module 301 is further specifically configured to:
calculate a prediction cost corresponding to each of the N first intra-prediction modes;
obtain the top M-1 first intra-prediction modes from the N first intra-prediction modes according to an ascending order of prediction costs; and
determine the M first intra-prediction modes based on a preset Planar mode and the top M-1 first intra-prediction modes; where the Planar mode is the 1st intra-prediction mode in the M first intra-prediction modes.

Optionally, the prediction cost corresponding to the first intra-prediction mode is a sum of absolute transformed differences between a predicted value of a template corresponding to a current block and a reconstructed value of the template, or the prediction cost corresponding to the first intra-prediction mode is a sum of absolute values between the predicted value of the template corresponding to the current block and the reconstructed value of the template.

Optionally, each of the K second prediction modes is sorted according to an ascending order of prediction costs.

Optionally, the top L second prediction modes in the K second prediction modes are sorted according to an ascending order of prediction costs, and L is a positive integer less than K.

Optionally, the list construction apparatus 300 further includes:
a first obtaining module, configured to obtain a first identifier;
a second determining module, configured to: in a case that the first identifier indicates enabling Planar independent coding, determine that the N first intra-prediction modes include a Planar mode; and
a third determining module, configured to: in a case that the first identifier indicates not enabling Planar independent coding, determine that the N first intra-prediction modes include no Planar mode.

Optionally, the first determining module 301 is further specifically configured to:
obtain a second identifier and a third identifier; and
in a case that the second identifier is used to indicate determining a target intra-prediction mode based on a PMPM list included in the MPM list and the third identifier is used to indicate not determining a target intra-prediction mode based on an SMPM list included in the MPM list, determine the M first intra-prediction modes based on the prediction cost corresponding to each of the N first intra-prediction modes.

Optionally, the first determining module 301 is further specifically configured to:
obtain a fourth identifier; and
in a case that the fourth identifier is the target value, determine the M first intra-prediction modes based on the prediction cost corresponding to each of the N first intra-prediction modes.

Optionally, the first determining module 301 is further specifically configured to:
in a case that a block size corresponding to a current block meets a preset condition, determine the M first intra-prediction modes based on the prediction cost corresponding to each of the N first intra-prediction modes.

Optionally, the M first intra-prediction modes are located before the K second intra-prediction modes in the MPM list.

Optionally, the list construction apparatus 300 further includes:
a second obtaining module, configured to obtain a second identifier and an intra-prediction mode index; and
a fourth determining module, configured to: in a case that the second identifier is used to indicate determining the target intra-prediction mode based on the PMPM list included in the MPM list, that the intra-prediction mode index is used to indicate determining the 1st mode in the PMPM list as the target intra-prediction mode, and that the 1st mode in the PMPM list is a Planar mode, determine the Planar mode as the target intra-prediction mode.

Optionally, a value of N is greater than or equal to a first threshold, and the first threshold is determined based on a frame type.

Optionally, the list construction apparatus 300 further includes:
a fifth determining unit, configured to: in a case that N is greater than or equal to a second threshold, determine that M is equal to the second threshold; or in a case that N is less than the second threshold, determine that M is equal to N.

Optionally, the second threshold is determined based on a frame type.

Optionally, the list construction apparatus 300 further includes:
a third obtaining unit, configured to obtain S candidate intra-prediction modes; and
a sixth determining unit, configured to: determine the N first intra-prediction modes based on an order of the S candidate intra-prediction modes, where S is greater than or equal to N.

Optionally, the S candidate intra-prediction modes are not repeated.

The MPM list established in the embodiments of this application includes M first intra-prediction modes and K second intra-prediction modes, where the M first intra-prediction modes are determined based on the prediction cost corresponding to each of the N first intra-prediction modes, and the K second intra-prediction modes are determined by performing mode offset on at least part of the angular prediction modes in the M first intra-prediction modes. In the embodiments of this application, optimizing the MPM list reduces the number of bits required for encoding intra-prediction mode indexes of the MPM list, thereby improving compression efficiency.

The apparatus embodiment corresponds to the foregoing list construction method embodiment shown in FIG. 1, and the implementation processes and implementations of the foregoing method embodiment can be applied to the apparatus embodiment, with the same technical effects achieved.

The list construction apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal listed above, and other devices may be a server, a network attached storage (Network Attached Storage, NAS), and the like. This is not limited in the embodiments of this application.

Optionally, as shown in FIG. 4, an embodiment of this application further provides a communication device 400, including a processor 401 and a memory 402. A program or instructions capable of running on the processor 401 are stored in the memory 402. For example, when the communication device 400 is a terminal and when the program or the instructions are executed by the processor 401, the steps of the foregoing embodiments of the list construction method are implemented, with the same technical effects achieved.

An embodiment of this application further provides a terminal, which includes a processor and a communication interface, where the processor is configured to perform the following operations:
determining M first intra-prediction modes based on a prediction cost corresponding to each of N first intra-prediction modes;
performing mode offset on at least part of angular prediction modes in the M first intra-prediction modes based on an order of the M first intra-prediction modes to obtain K second intra-prediction modes; and
establishing a most likely mode MPM list based on the M first intra-prediction modes and the K second intra-prediction modes.

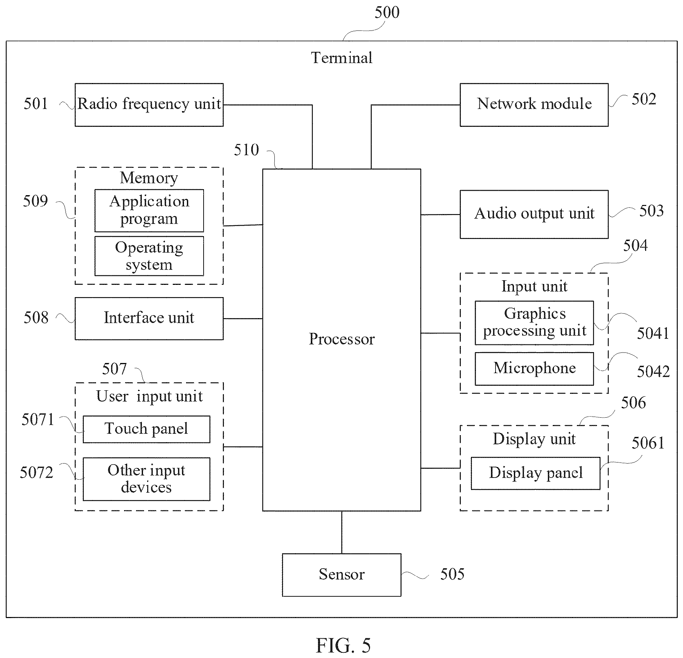

The terminal embodiment corresponds to the foregoing terminal side method embodiment, and the implementation processes and implementations of the foregoing method embodiments can be applied to the terminal embodiments, with the same technical effects achieved. Specifically, FIG. 5 is a schematic diagram of a hardware structure of a terminal implementing an embodiment of this application.

The terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include the display panel 5061. The display panel 5061 may be configured in a form of a liquid crystal display, an organic light-emitting diode, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 501 sends the downlink data to the processor 510 for processing; and the radio frequency unit 501 also sends uplink data to the network-side device. Generally, the radio frequency unit 501 includes, but is not limited to, an antenna, an amplifier, a transceiver, a coupler, a low noise amplifier, a duplexer, and the like.

The memory 509 may be configured to store software programs or instructions and various data. The memory 509 may mainly include a first storage area for storing programs or instructions and a second storage area for storing data, where the first storage area may store an operating system, an application program or instructions required by at least one function (for example, an audio playing function and an image playing function), and the like. In addition, the memory 509 may be a volatile memory or a non-volatile memory, or the memory 509 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 509 described in this embodiment this application includes but is not limited to these and any other appropriate types of memories.

The processor 510 may include one or more processing units. Optionally, the processor 510 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 510.

The processor 510 is configured to perform the following operations:
determining M first intra-prediction modes based on a prediction cost corresponding to each of N first intra-prediction modes;
performing mode offset on at least part of angular prediction modes in the M first intra-prediction modes based on an order of the M first intra-prediction modes to obtain K second intra-prediction modes; and
establishing a most likely mode MPM list based on the M first intra-prediction modes and the K second intra-prediction modes.

An embodiment of this application further provides a readable storage medium, where the readable storage medium stores a program or instructions, and when the program or the instructions are executed by a processor, the processes of the foregoing embodiments of the list construction method are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

Another embodiment of this application provides a chip, where the chip includes a processor and a communication interface, the communication interface is coupled to the processor, and the processor is configured to run a program or instructions to implement the processes of the foregoing embodiments of the list construction method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the list construction method, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A list construction method, comprising:
determining M first intra-prediction modes based on a prediction cost corresponding to each of N first intra-prediction modes; wherein the M first intra-prediction modes are at least part of the N first intra-prediction modes, wherein N is a positive integer greater than 1 and M is a positive integer less than or equal to N;
performing mode offset on at least part of angular prediction modes in the M first intra-prediction modes based on an order of the M first intra-prediction modes to obtain K second intra-prediction modes; wherein K is a positive integer greater than 1; and
establishing a most likely mode MPM list based on the M first intra-prediction modes and the K second intra-prediction modes; wherein the MPM list comprises the M first intra-prediction modes and the K second intra-prediction modes.

2. The method according to claim 1, wherein the determining M first intra-prediction modes based on a prediction cost corresponding to each of N first intra-prediction modes comprises:
calculating a prediction cost corresponding to each of the N first intra-prediction modes; and
obtaining the top M first intra-prediction modes from the N first intra-prediction modes according to an ascending order of prediction costs.

3. The method according to claim 1, wherein the determining M first intra-prediction modes based on a prediction cost corresponding to each of N first intra-prediction modes comprises:
calculating a prediction cost corresponding to each of the N first intra-prediction modes;
obtaining the top M-1 first intra-prediction modes from the N first intra-prediction modes according to an ascending order of prediction costs; and
determining the M first intra-prediction modes based on a preset Planar mode and the top M-1 first intra-prediction modes; wherein the Planar mode is the 1st intra-prediction mode in the M first intra-prediction modes.

4. The method according to claim 2 or 3, wherein the prediction cost corresponding to the first intra-prediction mode is a sum of absolute transformed differences between a predicted value of a template corresponding to a current block and a reconstructed value of the template, or the prediction cost corresponding to the first intra-prediction mode is a sum of absolute values between the predicted value of the template corresponding to the current block and the reconstructed value of the template.

5. The method according to any one of claims 1 to 3, wherein each of the K second prediction modes is sorted according to an ascending order of prediction costs.

6. The method according to any one of claims 1 to 3, wherein the top L second prediction modes in the K second prediction modes are sorted according to an ascending order of prediction costs, and L is a positive integer less than K.

7. The method according to any one of claims 1 to 3, wherein before the determining M first intra-prediction modes based on a prediction cost corresponding to each of N first intra-prediction modes, the method further comprises:
obtaining a first identifier;
in a case that the first identifier indicates enabling Planar independent coding, determining that the N first intra-prediction modes comprise a Planar mode; and
in a case that the first identifier indicates not enabling Planar independent coding, determining that the N first intra-prediction modes comprise no Planar mode.

8. The method according to any one of claims 1 to 3, wherein the determining M first intra-prediction modes based on a prediction cost corresponding to each of N first intra-prediction modes comprises:
obtaining a second identifier and a third identifier; and
in a case that the second identifier is used to indicate determining a target intra-prediction mode based on a PMPM list comprised in the MPM list and the third identifier is used to indicate not determining a target intra-prediction mode based on an SMPM list comprised in the MPM list, determining the M first intra-prediction modes based on the prediction cost corresponding to each of the N first intra-prediction modes.

9. The method according to any one of claims 1 to 3, wherein the determining M first intra-prediction modes based on a prediction cost corresponding to each of N first intra-prediction modes comprises:
obtaining a fourth identifier; and
in a case that the fourth identifier is the target value, determining the M first intra-prediction modes based on the prediction cost corresponding to each of the N first intra-prediction modes.

10. The method according to any one of claims 1 to 3, wherein the determining M first intra-prediction modes based on a prediction cost corresponding to each of N first intra-prediction modes comprises:
in a case that a block size corresponding to a current block meets a preset condition, determining the M first intra-prediction modes based on the prediction cost corresponding to each of the N first intra-prediction modes.

11. The method according to any one of claims 1 to 3, wherein the M first intra-prediction modes are located before the K second intra-prediction modes in the MPM list.

12. The method according to any one of claims 1 to 11, wherein the method further comprises:
obtaining a second identifier and an intra-prediction mode index; and
in a case that the second identifier is used to indicate determining the target intra-prediction mode based on the PMPM list comprised in the MPM list, that the intra-prediction mode index is used to indicate determining the 1st mode in the PMPM list as the target intra-prediction mode, and that the 1st mode in the PMPM list is a Planar mode, determining the Planar mode as the target intra-prediction mode.

13. The method according to any one of claims 1 to 12, wherein a value of N is greater than or equal to a first threshold, and the first threshold is determined based on a frame type.

14. The method according to any one of claims 1 to 13, wherein the method further comprises:
in a case that N is greater than or equal to a second threshold, determining that M is equal to the second threshold; or
in a case that N is less than the second threshold, determining that M is equal to N.

15. The method according to claim 14, wherein the second threshold is determined based on a frame type.

16. The method according to any one of claims 1 to 15, wherein the method further comprises:
obtaining S candidate intra-prediction modes; and
determining the N first intra-prediction modes based on an order of the S candidate intra-prediction modes, wherein S is greater than or equal to N.

17. The method according to claim 16, wherein the S candidate intra-prediction modes are not repeated.

18. A list construction apparatus, comprising:
a first determining module, configured to determine M first intra-prediction modes based on a prediction cost corresponding to each of N first intra-prediction modes; wherein the M first intra-prediction modes are at least part of the N first intra-prediction modes, wherein N is a positive integer greater than 1 and M is a positive integer less than or equal to N;
a processing module, configured to perform mode offset on at least part of angular prediction modes in the M first intra-prediction modes based on an order of the M first intra-prediction modes to obtain K second intra-prediction modes; wherein K is a positive integer greater than 1; and
an establishment module, configured to establish a most likely mode MPM list based on the M first intra-prediction modes and the K second intra-prediction modes; wherein the MPM list comprises the M first intra-prediction modes and the K second intra-prediction modes.

19. The apparatus according to claim 18, wherein the first determining module is specifically configured to:
calculate a prediction cost corresponding to each of the N first intra-prediction modes; and
obtain the top M first intra-prediction modes from the N first intra-prediction modes according to an ascending order of prediction costs.

20. The apparatus according to claim 18, wherein the first determining module is further specifically configured to:
calculate a prediction cost corresponding to each of the N first intra-prediction modes;
obtain the top M-1 first intra-prediction modes from the N first intra-prediction modes according to an ascending order of prediction costs; and
determine the M first intra-prediction modes based on a preset Planar mode and the top M-1 first intra-prediction modes; wherein the Planar mode is the 1st intra-prediction mode in the M first intra-prediction modes.

21. The apparatus according to claim 19 or 20, wherein the prediction cost corresponding to the first intra-prediction mode is a sum of absolute transformed differences between a predicted value of a template corresponding to a current block and a reconstructed value of the template, or the prediction cost corresponding to the first intra-prediction mode is a sum of absolute values between the predicted value of the template corresponding to the current block and the reconstructed value of the template.

22. The apparatus according to any one of claims 18 to 20, wherein the apparatus further comprises:
a first obtaining module, configured to obtain a first identifier;
a second determining module, configured to: in a case that the first identifier indicates enabling Planar independent coding, determine that the N first intra-prediction modes comprise a Planar mode; and
a third determining module, configured to: in a case that the first identifier indicates not enabling Planar independent coding, determine that the N first intra-prediction modes comprise no Planar mode.

23. The apparatus according to any one of claims 18 to 20, wherein the first determining module is further specifically configured to:
obtain a second identifier and a third identifier; and
in a case that the second identifier is used to indicate determining a target intra-prediction mode based on a PMPM list comprised in the MPM list and the third identifier is used to indicate not determining a target intra-prediction mode based on an SMPM list comprised in the MPM list, determine the M first intra-prediction modes based on the prediction cost corresponding to each of the N first intra-prediction modes.

24. The apparatus according to any one of claims 18 to 20, wherein the first determining module is further specifically configured to:
obtain a fourth identifier; and
in a case that the fourth identifier is the target value, determine the M first intra-prediction modes based on the prediction cost corresponding to each of the N first intra-prediction modes.

25. The apparatus according to any one of claims 18 to 20, wherein the first determining module is further specifically configured to:
in a case that a block size corresponding to a current block meets a preset condition, determine the M first intra-prediction modes based on the prediction cost corresponding to each of the N first intra-prediction modes.

26. The apparatus according to any one of claims 18 to 25, wherein the apparatus further comprises:
a second obtaining module, configured to obtain a second identifier and an intra-prediction mode index; and
a fourth determining module, configured to: in a case that the second identifier is used to indicate determining the target intra-prediction mode based on the PMPM list comprised in the MPM list, that the intra-prediction mode index is used to indicate determining the 1st mode in the PMPM list as the target intra-prediction mode, and that the 1st mode in the PMPM list is a Planar mode, determine the Planar mode as the target intra-prediction mode.

27. The apparatus according to any one of claims 18 to 26, wherein a value of N is greater than or equal to a first threshold, and the first threshold is determined based on a frame type.

28. The apparatus according to any one of claims 18 to 27, wherein the apparatus further comprises:
a fifth determining unit, configured to: in a case that N is greater than or equal to a second threshold, determine that M is equal to the second threshold; or in a case that N is less than the second threshold, determine that M is equal to N.

29. The apparatus according to any one of claims 18 to 28, wherein the apparatus further comprises:
a third obtaining unit, configured to obtain S candidate intra-prediction modes; and
a sixth determining unit, configured to: determine the N first intra-prediction modes based on an order of the S candidate intra-prediction modes, wherein S is greater than or equal to N.

30. A terminal, comprising a processor and a memory, wherein the memory stores a program or instructions capable of running on the processor, and when the program or instructions are executed by the processor, the steps of the list construction method according to any one of claims 1 to 17 are implemented.

31. A readable storage medium, wherein a program or instructions are stored on the readable storage medium, and when the program or the instructions are executed by a processor, the steps of the list construction method according to any one of claims 1 to 17 are implemented.
